# EUROPÄISCHE PATENTSCHRIFT

(11) **EP 1 007 952 B1**
(45) Veröffentlichungstag und Bekanntmachung des Hinweises auf die Patenterteilung: **27.10.2004**
(21) Anmeldenummer: 98945284.2
(22) Anmeldetag: 25.08.1998
(51) Int. Cl.: G01N 25/48

(54) **DIFFERENZ-THERMOANALYSE-VORRICHTUNG**
DIFFERENTIAL THERMOANALYSIS DEVICE
DISPOSITIF D'ANALYSE THERMIQUE DIFFERENTIELLE

(30) Priorität: 26.08.1997 EP 97114734; 17.12.1997 DE 19756072
(43) Veröffentlichungstag der Anmeldung: 14.06.2000
(73) Patentinhaber: Deutsches Zentrum für Luft- und Raumfahrt e.V., 53175 Bonn (DE)
(72) Erfinder: SCHILZ, Jürgen, D-51103 Köln (DE); MÜLLER, Wolf, Eckhard, D-53859 Niederkassel (DE); BÄHR, Gerhard, D-53842 Troisdorf-Spich (DE); RAUSCHER, Lutz, D-50676 Köln (DE)
(74) Vertreter: Hilleringmann, Jochen, Dipl.-Ing.
(86) Internationale Anmeldenummer: PCT/EP1998/005382
(87) Internationale Veröffentlichungsnummer: WO 1999/010732

(56) Entgegenhaltungen:
- DE-A- 4 202 733
- JP-A- 59 043 338
- US-A- 3 554 002
- US-A- 4 095 453
- US-A- 5 059 543
- GERWEN VAN P ET AL: "THIN-FILM BORON-DOPED POLYCRYSTALLINE SILICON 70%-GERMANIUM 30% FORTHERMOPILES" SENSORS AND ACTUATORS A, Bd. A53, Nr. 1/03, Mai 1996, Seiten 325-328, XP000620316

## Beschreibung

Die Erfindung betrifft eine Differenz-Thermoanalyse-Vorrichtung zur messtechnischen Untersuchung oder Ermittlung eines thermophysikalischen Parameters einer Messprobe, insbesondere zur Untersuchung von Phasenübergängen oder zur Ermittlung der spezifischen Wärme der Messprobe.

Differenz-Thermoanalyse-Vorrichtungen (DTA-Vorrichtungen) dienen zur (quantitativen) Untersuchung von Phasenübergängen sowie zur Messung der spezifischen Wärme einer Substanz. Beispiele hierfür sind in PCT-A-94/06000 und US-A- 4 126 032 beschrieben. Im Fall der quantitativen Messmöglichkeit spricht man auch vom Wärmestrom-Differenz-Kalorimeter (DSC). Im folgenden soll nicht explizit zwischen diesen beiden Typen unterschieden werden, da ihnen dasselbe Messprinzip zu Grunde liegt.

Eine weitere bekannte Differenz-Thermoanalyse-Vorrichtung ist in US-A-4 095 453 beschrieben. Diese Vorrichtung ist versehen mit einer Wärmequelle, einer Sensorplatte mit einer Messproben-Ankoppelzone für eine Messprobe und einer Referenzproben-Ankoppelzone für eine Referenzprobe, einem Messproben-Temperatursensor, einem Referenzproben-Temperatursensor und einer Auswerteeinheit. Femer weist die bekannte Vorrichtung eine Sensorplatte auf, die bereichsweise aus keramischem Material besteht. Diese keramische Sensorplatte erfüllt innerhalb der bekannten Vorrichtung eine rein konstruktive Aufgabe als mechanisches Trägerelement und trägt nicht zur elektrischen Signalentstehung bei.

Bei der Differenz-Thermoanalyse werden die zu untersuchende Messprobe und eine Referenzprobe gleichzeitig einem vorgegebenen Temperaturverlauf unterworfen. Tritt eine Phasenumwandlung der Probe auf bzw. gibt es eine Differenz in der spezifischen Wärme zwischen Probe und Referenz, so macht sich dies in einer Temperaturdifferenz zwischen Probe und Vergleichssubstanz bemerkbar.

Diese Temperaturdifferenz wird über geeignet an Probe und Referenzsubstanz angebrachte Thermoelemente detektiert und in eine elektrische Spannung umgewandelt. Diese Meßmethode ist seit Jahrzehnten etabliert und wird sowohl bei tiefen Temperaturen bis hinab in den Milli-Kelvin-Bereich als auch bei hohen Temperaturen bis über 2000 °C eingesetzt.

Die "Güte" oder "Effizienz" eines Systems mit dem oben erläuterten Meßprinzip wird dabei durch
- die Empfindlichkeit der Temperatur-Auflösung ξ und
- die Zeitkonstante der Anordnung τ
bestimmt. Dabei hängt die Empfindlichkeit der Temperatur-Auflösung insbesondere von der Höhe der sich an den Thermoelementen ausbildenden Thermospannung ab. Diese sollte vorteilhaft besonders groß sein.

Um einen großen Probendurchsatz zu erhalten, ist somit eine möglichst große Empfindlichkeit, d. h. große Temperatur-Auflösung bei möglichst geringer Zeitkonstante erwünscht.

Bislang war es bedingt durch die relativ geringe Thermokraft der eingesetzten metallischen Thermoelement-Materialien nur möglich, lediglich einen dieser Parameter auf Kosten des anderen in Richtung größerer Effizienz des Meßsystems zu steigern. Eine hohe Auflösung wurde z. B. dadurch erreicht, daß nicht ein einzelnes Thermoelement zur Temperaturmessung verwendet wurde, sondern eine Thermosäule, die in den Probentiegel integriert wurde. Die dadurch erreichte Empfindlichkeitssteigerung eines solchen sogenannten Bechersystems geht allerdings mit einer Vergrößerung der Zeitkonstanten einher, da sich durch die Ausführung in Bechergestalt die wirksame thermische Masse des Meßkopfes erhöht.

Schnelle herkömmliche Meßanordnungen enthalten eine einzelne Sensorplatte aus einem metallischen Thermoelement-Material wie z. B. Chromel, Konstantan oder Platin, an der an zwei Stellen Thermoelement-Drähte angebracht sind. An diesen Positionen befinden sich die beiden Tiegel mit der Meßprobe und Vergleichs- bzw. Referenzprobe. Solch ein System wird auch als Scheibenmeßsystem bezeichnet. Da die Platte an den Tiegelpositionen und in ihrer unmittelbaren Umgebung möglichst dünn ausgeführt ist, besitzt dieser Bereich eine sehr kleine thermische Masse und die Anordnung erreicht somit eine kleine Zeitkonstante. Allerdings ist das System wegen der geringen Thermospannungen der metallischen Thermoelement-Materialien relativ unempfindlich.

Herkömmliche Scheibenmeßsysteme aus metallischen thermoelektrischen Legierungen weisen Zeitkonstanten um 10 s auf, die je nach Meßaufgabe eine Aufheizrate bis zu 100 K/Minute erlauben, wobei eine maximale Empfindlichkeit von 10 µV/mW erreicht wird. Bechersysteme erreichen Empfindlichkeiten von bis zu 100 µV/mW, wobei hier allerdings wegen der schlechten zeitlichen Auflösung (Zeitkonstanten größer als 30 s) nur Aufheizraten bis 20 K/Minute sinnvoll sind.

Es sei noch angemerkt, daß z. B. aus US-A-5,059,543 Strahlungsdetektoren bekannt sind, bei denen Halbleitermaterial als aktives Sensorelement eingesetzt wird.

Die Aufgabe eines Differenz-Thermoanalyse-Systems ist es, eine Temperaturdifferenz zwischen Probe und einer Vergleichssubstanz bei einem dynamischen Temperaturverlauf derart zu messen, daß möglichst quantitative Schlüsse über Umwandlungsenergien oder die spezifische Wärme möglich werden. Die Messung der Temperaturdifferenz kann dabei je nach Bauart und Aufgabenstellung auf unterschiedliche Weise erfolgen. Kommt es z. B. auf die Detektierung einer extrem geringen Umwandlungswärme an, so wird bisher vorzugsweise ein Bechersystem mit Thermosäule verwendet. Dies resultiert wegen der großen Zeitkonstanten in der Temperaturdifferenz-über-Zeit Darstellung in einem flachen Signal, welches nur langsam abklingt. Müssen dabei mehrere auf der Temperaturskala nahe beieinander liegende Umwandlungen aufgelöst werden, so kann der Fall eintreten, daß die Zeit-Auflösung auf Grund der großen Zeitkonstanten nicht mehr ausreicht.

Geht man in diesem Fall zum schnelleren herkömmlichen Scheibenmeßsystem über, so kann man auf Grund der kürzeren Zeitkonstanten die verschiedenen Signale voneinander trennen; verliert aber gleichzeitig Empfindlichkeit in der Auflösung der Temperaturdifferenz, so daß die Signale kleiner werden und unter Umständen ganz im Rauschen verschwinden.

Der Erfindung liegt die Aufgabe zugrunde, eine Differenz-Thermoanalyse-Vorrichtung zu schaffen, die bei geringen Zeitkonstanten eine maximale Empfindlichkeit der Temperatur-Auflösung gewährleistet.

Zur Lösung dieser Aufgabe wird mit der Erfindung eine Differenz-Thermoanalyse-Vorrichtung zur meßtechnischen Untersuchung oder Ermittlung eines thermophysikalischen Parameters einer thermophysikalischen Meßprobe, insbesondere zur Untersuchung von Phasenübergängen oder zur Ermittlung der spezifischen Wärme der Meßprobe vorgeschlagen, wobei die Differenz-Thermoanalyse-Vorrichtung versehen ist mit
- einer Wärmequelle,
- einer thermisch mit der Wärmequelle gekoppelten Sensorplatte, auf bzw. in der eine Meßproben-Ankoppelzone zur thermischen Ankopplung einer zu vermessenden Meßprobe und eine Referenzproben-Ankoppelzone zur thermischen Ankopplung einer Referenzprobe mit einem bezüglich des zu untersuchenden oder zu messenden Parameters bekannten Verhalten ausgebildet sind,
- einem Meßproben-Temperatursensor zur Ermittlung der lokalen Temperatur der Sensorplatte an der Meßproben-Meßstelle,
- einem Referenzproben-Temperatursensor zur Ermittlung der lokalen Temperatur der Sensorplatte an der Referenzproben-Meßstelle und
- einer Auswerteeinheit, die mit den Temperatursensoren elektrisch verbunden ist und anhand einer Differenz der lokalen Temperaturen der Meßprobenund Referenzproben-Ankoppelzonen der Sensorplatte sowie des bekannten Verhaltens der Referenzprobe eine Ausgabe erzeugt, die für den interessierenden Parameter der Meßprobe repräsentativ ist,
- wobei die Sensorplatte zumindest innerhalb ihrer Meßproben- und Referenzproben-Ankoppelzonen ein keramisches oder ein ein- oder polykristallines thermoelektrisches Halbleitermaterial aufweist.

Bei der erfindungsgemäßen Differenz-Thermoanalyse-Vorrichtung speist eine Wärmequelle eine Sensorplatte, die mit der Wärmequelle thermisch gekoppelt ist. Auf der Sensorplatte sind mindestens eine Ankoppelzone zur thermischen Ankopplung der zu vermessenden Meßprobe und mindestens eine Ankoppelzone zur thermischen Ankopplung der Referenzprobe ausgebildet. In beiden Ankoppelzonen befinden sich Temperatursensoren zur Ermittlung der lokalen Temperaturen innerhalb der Ankoppelzonen. Bei diesen Temperatursensoren handelt es sich insbesondere um Thermoelemente, die eine der Temperatur entsprechende elektrische Spannung abgeben. Die Temperatursensoren sind mit einer Auswerteeinheit verbunden. Anhand der gemessenen Temperaturdifferenz und des bekannten Verhaltens der Referenzprobe läßt sich anhand des Ausgabesignals der Auswerteeinheit auf das Verhalten der zu untersuchenden Meßprobe schließen.

Die Temperatursensoren sind vorzugsweise jeweils als Thermoelemente ausgebildet, die aus der Materialkombination Sensorplatte und jeweils einer Zuleitung (Thermoleitung) bestehen. Die beiden Thermoleitungen, die aus einem zum Material der Sensorplatte verschiedenen Material bestehen, bilden zusammen mit der Sensorplatte ein Differenzthermoelement.

Erfindungsgemäß besteht die Sensorplatte der Differenz-Thermoanalyse-Vorrichtung zumindest innerhalb ihrer Meßproben- und Referenzproben-Ankoppelzonen aus thermoelektrischem Halbleitermaterial, das in keramischer oder ein- oder polykristalliner Form vorliegt.

Der entscheidende Nachteil der bekannten Scheibensysteme, nämlich die relativ geringe Empfindlichkeit, kann erfindungsgemäß durch die Verwendung von keramischem, ein- oder polykristallinem halbleitendem Material mit thermoelektrischen Eigenschaften überwunden werden. Derartige Materialien zeigen nämlich bei gleichen oder sogar verminderten Zeitkonstanten in einem wenn auch begrenzten Temperaturbereich eine erheblich gesteigerte Empfindlichkeit, da sie in diesem Temperaturbereich wesentlich höhere Seebeck-Koeffizienten aufweisen. Der begrenzte Temperaturbereich resultiert daraus, daß verbunden mit dem für Halbleiter typischen Temperaturverlauf des Leitungsverhaltens der Seebeck-Koeffizient (oft auch als "Thermokraft" bezeichnet) im Bereich seiner höchsten Werte ein charakteristisches Maximum ausbildet.

Die hohe Empfindlichkeit der erfindungsgemäßen Differenz-Thermoanalyse-Vorrichtung wird also durch spezielle halbleiterphysikalische Effekte des zumindest für die Ankoppelzonen verwendeten Halbleitermaterials bewirkt, wobei diese Effekte unlösbar mit der spezifischen Temperaturcharakteristik des Seebeck-Koeffizienten verbunden sind. Bei typischer Bandleitung, die bei den höchst-effizienten thermoelektrischen Halbleitern überwiegend vorliegt, steigt der Seebeck-Koeffizient mit der Temperatur stetig an, bevor er beim Einsetzen der Eigenleitung wieder abnimmt und bis auf sehr geringe Werte abfällt. Innerhalb eines begrenzten Temperaturintervalls von maximal einigen 100 K kann also der Vorteil einer extrem hohen Empfindlichkeit mit der erfindungsgemäßen Differenz-Thermoanalyse-Vorrichtung ausgenutzt werden.

Um das Meßprinzip der Differenz-Thermoanalyse breitbandig in der Praxis einsetzen zu können, sollte die Differenz-Thermoanalyse-Vorrichtung über einen weiten Temperaturbereich eine im wesentlichen gleichmäßig hohe Empfindlichkeit (und Temperatur-Auflösung), also eine gleichmäßig große Thermospannung aufweisen. Aufgrund des heutigen Kenntnisstandes ist man stets davon ausgegangen, daß diese Anforderung nur von metallischen Sensorplatten befriedigt werden kann. Diese Systeme weisen zwar geringe Werte des Seebeck-Koeffizienten auf, die jedoch zu hohen Temperaturen hin ansteigen bzw. sich bei mittleren Werten stabilisieren. Zudem sind die bekannten metallischen Sensoren gut strukturiert, durch die hohen Ladungsträgerdichten der Metalle unempfindlich gegen Verunreinigungen sowie phasenstabil. Letzteres ist insbesondere für ein derart empfindliches Meßsystem, wie es die Differenz-Thermoanalyse darstellt, von Bedeutung.

Mit der Erfindung, nämlich dem Einsatz thermoelektrischer Halbleitermaterialien für die bzw. in der Sensorplatte (aktives Element bzw. Sensorelement) einer Differenz-Thermoanalyse-Vorrichtung, lassen sich jedoch auch Thermoanalyse-Systeme mit hoher Empfindlichkeit über einen weiten Temperaturbereich realisieren. Die Lösung dieses Problems besteht erfindungsgemäß darin, daß die Sensorplatte eine Kombination mehrerer verschiedener Halbleitermaterialien mit in unterschiedlichen Temperaturbereichen höchster Empfindlichkeit (Thermokraft) aufweist. Die charakteristische Temperatur nämlich, bei der der Abfall des Seebeck-Koeffizienten von halbleitenden Materialien einsetzt, wird durch die Dotierungskonzentration sowie die Breite der Bandlücke im Halbleiter bestimmt. Die Bandlücke ist ein materialspezifischer Parameter und variiert von Material zu Material. Bei den meisten Standardhalbleitern kann die Dotierungskonzentration über mehrere Zehnerpotenzen definiert eingestellt werden. Damit kann das Einsetzen der Eigenleitung und damit das Maximum des Seebeck-Koeffizienten praktisch für eine vorgegebene Temperatur "programmiert" werden. Durch Kombination von lediglich zwei oder drei speziell abgestimmten Halbleitermaterialien kann der für praktische Meßsysteme relevante Temperaturbereich bereits abgedeckt werden.

Die zuvor beschriebene in Bezug auf die Vergrößerung des Temperaturbereichs abzielende Weiterbildung der erfindungsgemäßen Differenz-Thermoanalyse-Vorrichtung kann auf zweierlei grundsätzlich verschiedene Weisen realisiert werden. Beiden Varianten ist gemeinsam, daß die Sensorplatte mehrere Paare aus jeweils einer Meßproben- und einer Referenzproben-Ankoppelzone aufweist, wobei die beiden Ankoppelzonen innerhalb eines Paares aus demselben Halbleitermaterial mit denselben thermoelektrischen Eigenschaften bestehen, die Halbleitermaterialien bzw. deren thermoelektrische Eigenschaften sich jedoch von Paar zu Paar unterscheiden. Die Ankoppelzonen jedes Paares sind zentralsymmetrisch auf der Sensorplatte angeordnet, wobei im Symmetriezentrum der Sensorplatte oder zentralsymmetrisch von außen die Einspeisung der Wärmeleistung durch die Wärmequelle erfolgt. Bei der ersten Realisierungsvariante sind die einzelnen Ankoppelzonen derart weit voneinander beabstandet, daß mit mehreren identischen Meßproben und mehreren identischen Referenzproben gearbeitet wird. Jede Meßprobe bzw. jede Referenzprobe ist dabei also mit einer einzigen Ankoppelzone thermisch gekoppelt. Sämtliche Ankoppelzonen sind mit Temperatursensoren, insbesondere Thermoelementen versehen, deren Ausgangsspannungen der Auswerteeinheit zugeführt werden. Die Auswerteeinheit wählt nun für die Differenzmessung dasjenige Ankoppelzonenpaar aus, deren zugehörige Temperatursensoren die größten Ausgangsspannungen liefert.

Der oben beschriebene Aufbau der Sensorplatte macht es erforderlich, daß mehrere identische Meßproben gleichzeitig vermessen bzw. untersucht werden. Dies kann je nach Meßprobe problematisch sein, und zwar dann, wenn die Menge an zu untersuchender Substanz begrenzt ist. Für einen derartigen Fall bietet es sich an, unterschiedliche Halbleitermaterialien in einer gemeinsamen Ankoppelzone zu konzentrieren, wobei diese einzelnen Ankoppelteilzonen derart dicht benachbart zueinander angeordnet sind, daß sie sämtlich gleichzeitig in thermischem Kontakt mit einer Meßprobe bzw. einer Referenzprobe stehen. Auch bei dieser Ausgestaltung der Sensorplatte gilt, daß die einzelnen Ankoppelteilzonen zentralsymmetrisch angeordnet sind. Als geometrische Form einer Ankoppelzone bietet sich beispielsweise eine Kreisfläche an. Bei der zuvor beschriebenen Ausgestaltung der Sensorplatte mit pro Meßproben- bzw. Referenzproben-Ankoppelzone mehreren Teilzonen ist es insoweit zweckmäßig, ganzzahlige Teilflächen der Kreisfläche mit unterschiedlichen Halbleitermaterialien zu belegen, wobei die einzelnen Teilflächen elektrisch gegeneinander isoliert sind.

Für die Empfindlichkeit der Messung ist es erforderlich, wenn die Sensorplatte um die einzelnen Ankoppelzonen herum eine thermische Widerstandskonzentration aufweisen. Zu große thermische Widerstände jedoch wirken sich nachteilig auf die Zeitkonstante des Gesamtsystems aus, die grundsätzlich mit größer werden dem thermischen Widerstand der Sensorplatte ansteigt. Durch Wahl geeigneter Materialien kann hier ein Kompromiß gefunden werden, der bei noch vertretbaren Zeitkonstanten ausreichend große Wärmewiderstände um die Ankoppelzonen herum entstehen läßt, was wiederum insoweit auf die Empfindlichkeit positiv einwirkt, als der Wärmefluß von den Ankoppelzonen zum Rest der Sensorplatte behindert ist und sich dadurch eine erhöhte Temperaturdifferenz zwischen Ankoppelzone und Hauptmasse der Sensorplatte ausbildet.

Eine Erhöhung des Wärmewiderstandes um die Ankoppelzonen herum läßt sich konstruktiv dadurch realisieren, daß die Menge an Material im Bereich zwischen den Ankoppelzonen und dem Rest der Sensorplatte verringert wird. Dies wiederum kann durch eine Verringerung der Dicke der Sensorplatte im Verbindungsbereich zwischen den Ankoppelzonen und der Hauptmasse der Sensorplatte und/oder durch Einbringung von Aussparungen in diesen Verbindungsbereich realisiert werden. Die Aussparungen können durch eine Ätztechnik, durch Laserschneiden, mechanisches Schleifen o. dgl. an sich bekannte Materialbearbeitungstechniken realisiert werden.

Um den thermischen Widerstand zwischen den Ankoppelzonen und den Meß- bzw. Referenzproben zu verringern, ist es zweckmäßig, auf die Ankoppelzonen eine Metallbeschichtung aufzubringen. Hierfür bieten sich insbesondere Ni, Au, Mo, Pt, Al bzw. Legierungen daraus an, wobei die Dicke der Metallbeschichtung allgemein zwischen 0,1 und 500 µm liegen sollte. Zur Unterdrückung von Störsignalen durch Phasenumwandlungen zwischen dem halbleitenden Material der Ankoppelzonen und der Metallisierung ist es zweckmäßig, zwischen das halbleitende Material und die Metallbeschichtung eine Schutzschicht anzuordnen, bei der es sich vorzugsweise um ein Oxid handelt. Zum Schutz vor äußeren Verunreinigungen der halbleitenden Materialien der Sensorplatte ist es zweckmäßig, diese mit einer nicht leitenden chemisch inerten Beschichtung, insbesondere SiO₂, SiN, Al₂O₃ zu versehen.

Für den Aufbau der mit Ankoppelzonen aus thermoelektrischem halbleitendem keramischem oder ein- oder polykristallinem Halbleitermaterial als aktivem Material versehenen Sensorplatte bieten sich diverse Lösungskonzepte an. So ist es beispielsweise möglich, daß die Sensorplatte aus Metall oder einem anderen Grundmaterial mit guter Wärmeleitfähigkeit besteht, wobei in die Platte für jede zu schaffende Ankoppelzone eine Scheibe oder ein Stück aus halbleitendem thermoelektrischem Material eingesetzt, eingeschweißt, eingelötet oder in anderer Weise fixiert ist. Über das Grundmaterial sind die mindestens zwei Ankoppelzonen elektrisch miteinander verbunden, so daß durch die Thermoelemente die erforderliche Temperaturdifferenzmessung unter Ausnutzung des Seebeck-Effekts erfolgen kann. Alternativ zu dem vorstehend genannten Aufbau bietet sich an, die Sensorplatte aus isolierendem oder elektrisch schlecht leitfähigem Material (beispielsweise Oxidkeramik, Saphir, Glimmer, niedrig dotierter Halbleiter) herzustellen, wobei die Sensorplatte ein oder mehrere Schichten oder Leiterbahnen aus keramischen oder kristallinen thermoelektrischen Halbleitern tragen, die die Ankoppelzonen bilden und miteinander elektrisch verbinden. Schließlich ist es auch denkbar, die Sensorplatte aus elektrisch isolierendem bzw. schlecht leitfähigem Material mit guter Wärmeleitfähigkeit herzustellen, wobei die elektrischen Kontakte zwischen den hochempfindlichen Ankoppelzonen, die in obiger Weise auf bzw. in der Sensorplatte angeordnet sind, durch eine aufgebrachte Metallisierung bzw. andersartige metallischer Verbindungen hergestellt wird.

Als halbleitendes thermoelektrisches Material kommen insbesondere die nachfolgend genannten Werkstoffe zum Einsatz:
- Si₁₋ₓGeₓ mit x zwischen 0 und 1 (einschließlich), dotiert mit P, Ga, As oder B oder anderen Zusätzen, insbesondere mit Ladungsträgerdichten zwischen 10¹⁵ und 10²¹ cm⁻³,
- FeSi₂ dotiert mit Co, Al, Mn, Ni oder Cr, ihren Kombinationen oder weiteren Elementen, so daß die Ladungsträgerdichte Werte zwischen 10¹⁵ und 10²¹ cm⁻³ annimmt,
- Bi₂(Te₁₋ₓSeₓ)₃ mit x zwischen 0 und 1 (einschließlich), so dotiert (z. B. mit J, Cl, Sn, o. dgl. oder mittels Te- oder Se-Überschuß), daß die Ladungsträgerdichte Werte zwischen 10¹⁵ und 10²¹ cm⁻³ annimmt,
- (Bi₁₋ₓSbₓ)₂Te₃ mit x zwischen 0 und 1 (einschließlich), so dotiert (z. B. mit Pb, Ge, o. dgl. oder mittels Bi- oder Sb-Überschuß), daß die Ladungsträgerdichte Werte zwischen 10¹⁵ und 10²¹ cm⁻³ annimmt, und
- Halbleiter, die durch geeignete Dotierungen Störbandleitungseffekte ("hopping conductivity") oder Polaronen-Effekte zeigen, und die daher in der Lage sind, die Thermospannung über breite Temperaturbereiche hinweg zu erhöhen. Hier sind insbesondere die Materialien AlB₁₂, FeSi₂ und B₁₋ₓCₓ zu nennen.

Der derzeit größte Markt für Thermoanalyse-Geräte ist die Qualitätskontrolle in der materialherstellenden und -verarbeitenden Industrie. Hier ist insbesondere der Polymerbereich zu nennen, wo Polymerisationsverhalten in Temperaturbereichen bis 400 °C getestet wird. Für diesen Markt gibt es etablierte Geräte; teilweise mit automatischem Probenwechsler. Die erreichbaren Empfindlichkeiten der heutigen Scheibenmeßsysteme sind hier ausreichend. Trotzdem kann eine Verbesserung durch die erfindungsgemäße Differenz-Thermoanalyse-Vorrichtung erzielt werden, da die gesteigerte Empfindlichkeit eine höhere Heizrate ermöglicht und damit die Zykluszeit für die gesamte Messung verkürzt.

Seit zwei Jahren beginnt ein neuer Markt für Thermoanalyse-Geräte zu wachsen. Dies ist der Bereich der Lebensmittelkontrolle, in dem die Qualität von Fetten, Stärken, Eiweißen etc. an ihrem Schmelz- bzw. Vernetzungs- oder Denaturierungsverhalten beurteilt wird. Dies spielt sich in der Regel bei Temperaturen unter 150 °C ab. Hier sind die Wärmetönungen bei der Vernetzung oder Umwandlungen so gering, daß sie mit derzeitigen Scheibenmeßsystemen nicht aufgelöst werden können. Deshalb mußte hier bislang auf die empfindlicheren aber langsamen Bechersysteme zurückgegriffen werden.

Hier stellt sich der wohl größte Markt für die erfindungsgemäße Differenz-Thermoanalyse-Vorrichtung dar. Eine Abschätzung hat ergeben, daß eine Empfindlichkeitssteigerung gegenüber den üblichen Scheibenmeßsystemen um den Faktor 4 ausreicht, um allen geforderten Ansprüchen gerecht zu werden. Dieses System ist bereits empfindlich genug, ausreichend schnell und automatisierbar.

Nachfolgend werden anhand der Figuren Ausführungsbeispiele der Erfindung näher erläutert. Im einzelnen zeigen:
- Fig. 1: eine schematische Darstellung des Aufbaus einer Differenz-Thermoanalyse-Vorrichtung unter Verwendung einer Sensorplatte gemäß einem ersten Ausführungsbeispiel der Erfindung,
- Fig. 2: eine Draufsicht auf eine Sensorplatte gemäß einem zweiten Ausführungsbeispiel der Erfindung mit auf konstruktive Weise realisierter Wärmewiderstandskonzentration um die Meßproben- und Referenzproben-Positionen,
- Fig. 3: eine prinzipielle Darstellung einer Differenz-Thermoanalyse-Vorrichtung gemäß einem weiteren Ausführungsbeispiel der Erfindung, bei dem die Sensorplatte mehrere Referenzproben- und Meßproben-Positionen mit unterschiedlichen halbleitenden Materialien aufweist.
- Fig. 4: eine Draufsicht auf die Sensorplatte der Vorrichtung gemäß Fig. 3,
- Fig. 5: eine Draufsicht von oben auf die Sensorplatte einer weiteren Differenz-Thermoanalyse-Vorrichtung und
- Fig. 6: eine Unteransicht der Sensorplatte gemäß Fig. 5.

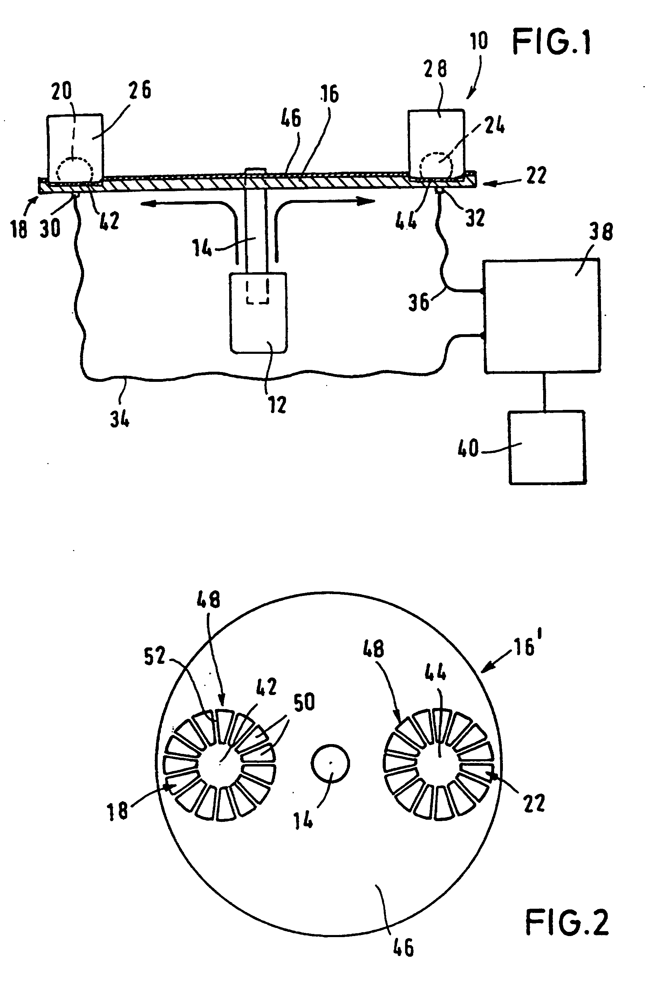

In Fig. 1 ist ein erstes Ausführungsbeispiel einer Differenz-Thermoanalyse-Vorrichtung 10 prinzipiell dargestellt. Diese Vorrichtung 10 weist eine Wärmequelle 12 auf, deren Wärme über einen thermisch gekoppelten Stab 14 oder eine äußere Umhüllung, Kapsel o. dgl. einer scheibenförmigen Sensorplatte 16 zugeführt wird. Die Sensorplatte 16 ist thermisch mit dem Stab 14 gekoppelt, wobei der Stab 14 im Mittelpunkt der Sensorplatte 16 oder an ihrem Umfang mit dieser verbunden ist. Auf der Sensorplatte 16 sind eine Ankoppelzone 18 für eine Meßprobe 20 und eine Ankoppelzone 22 für eine Referenzprobe 24 ausgebildet. Diese beiden Ankoppelzonen 18,22 sind diametral einander gegenüberliegend und damit zentralsymmetrisch zum Mittelpunkt der Sensorplatte 16 angeordnet. Die Meßprobe 20 und die Referenzprobe 24 sind in Tiegeln 26,28 untergebracht, die in thermisch gut leitendem Kontakt auf den Ankoppelzonen 18,22 stehen. Die Sensorplatte 16 besteht durchgehend aus einem keramischen, ein- oder polykristallinen thermoelektrischen halbleitenden Material, bei dem es sich insbesondere um einen der in der Beschreibungseinleitung genannten Werkstoffe handelt. An der Unterseite der Sensorplatte 16 im Bereich der Ankoppelzonen 18,22 befinden sich Thermoelemente 30,32, die durch Verbinden von elektrischen Zuleitungen 34,36 mit der Sensorplatte 16 realisiert sind. Das Material dieser Zuleitungen 34, 36 ist verschieden von dem Material der Sensorplatte 16. Als Material für die Zuleitungen 34,36 kommen die üblichen metallischen Thermoelementmaterialien zum Einsatz. Die Zuleitungen 34,36 führen zu einer Auswerteeinheit 38, in der die sich aufgrund der Temperaturen der Ankoppelzonen 18,22 einstellende Spannungsdifferenz zwischen den beiden Zuleitungen 34,36 ausgewertet wird. Das Ergebnis wird auf einer Anzeigevorrichtung 40 angezeigt bzw. auf einem Steuerrechner gespeichert.

Wie bei 42 und 44 angedeutet, weist die Sensorplatte 16 im Bereich ihrer Ankoppelzonen 18,22 Metallisierungen auf, die der Verbesserung des Wärmeübergangs von der Sensorplatte 16 zu den Tiegeln 26,28 dienen. Zwischen diesen Metallisierungsbeschichtungen 42,44 und der Sensorplatte 16 kann jeweils noch eine (z. B. elektrisch isolierende) Schutzschicht aus insbesondere einem Oxid zur Unterdrückung von Störsignalen durch Phasenumwandlungen angeordnet sein. Im übrigen Bereich außerhalb der Ankoppelzonen 18,22 ist die Sensorplatte mit einer Schutzschicht 46 aus beispielsweise SiO₂, SiN, Al₂O₃ versehen.

Während des Meßbetriebs der Vorrichtung 10 wird die Sensorplatte 16 durch die Wärmequelle 12 erwärmt. Dabei verläuft der Wärmefluß von der Wärmequelle 12 über den Stab 14 zum Mittelpunkt der Sensorplatte 16, von wo aus er radial gleichmäßig nach außen abgeführt wird. Zur Durchführung schneller Messungen ist es zweckmäßig, wenn der Wärmewiderstand nur gering ist. Andererseits sollte zur Verhinderung eines Wärmeabflusses von den Ankoppelzonen 18,22 zum übrigen Bereich der Sensorplatte 16 dafür gesorgt werden, daß der Wärmewiderstand um die Ankoppelzonen 18,22 herum vergrößert ist.

Aufgrund des unterschiedlichen Verhaltens von Meßprobe 20 und Referenzprobe 24 werden sich die diesen zugeordneten Ankoppelzonen 18 bzw. 22 unterschiedlich stark erwärmen. Diese Temperaturdifferenz wird über das Differenzthermoelement (DTE) 34,16,36 detektiert und in eine Meßspannung umgewandelt, die in der Auswerteeinheit 38 ausgewertet wird.

Fig. 2 zeigt in Draufsicht eine alternative Ausgestaltung der Sensorplatte 16 der Fig. 1. In Fig. 2 ist diese Sensorplatte mit 16' bezeichnet. Soweit die Teile der Sensorplatte 16' denjenigen der Sensorplatte 16 der Fig. 1 entsprechen, sind sie in Fig. 2 mit den gleichen Bezugszeichen versehen.

Bei der alternativen Ausgestaltung der Sensorplatte 16' ist zur Erhöhung des Wärmewiderstandes um die Ankoppelzonen 18,22 herum jeweils ein speziell ausgestalteter Verbindungsbereich 48 geschaffen, in dem in die Sensorplatte 16' mehrere durchgehende Aussparungen 50 mit dazwischenliegenden radial verlaufenden Stegen 52 eingebracht sind. Über die Verbindungsstege 52 sind also die Ankoppelzonen 18,22 mechanisch und elektrisch mit dem Rest der Sensorplatte 16' verbunden. Die Verbindungsstege 52 weisen zudem eine geringere Dicke als die Sensorplatte 16' in ihrem übrigen Bereich auf. Diese speichenähnliche Konstruktion führt zu einem erhöhten Wärmewiderstand um die Ankoppelzonen 18,22 herum, was die Meßempfindlichkeit der Sensorplatte 16' erhöht.

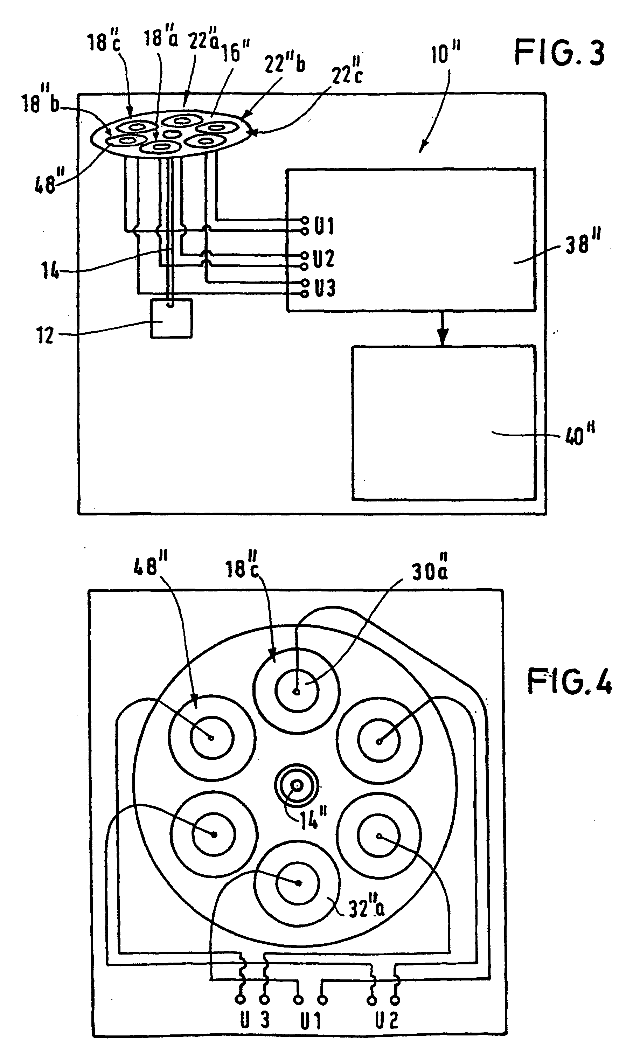

Fig. 3 zeigt in prinzipieller Darstellung eine Differenz-Thermoanalyse-Vorrichtung 10" gemäß einem weiteren Ausführungsbeispiel der Erfindung. Auch hier gilt, daß diejenigen Teile, die der Differenz-Thermoanalyse-Vorrichtung 10 der Fig. 1 entsprechen, mit den gleichen Bezugszeichen gegebenenfalls doppeltgestrichen versehen sind. Die Sensorplatte 16" der Thermoanalyse-Vorrichtung 10" weist insgesamt drei Ankoppelzonen 18a",18b" und 18c" für drei Meßproben und drei Ankoppelzonen 22a", 22b" und 22c" für drei Referenzproben auf. Die Meßproben und die Referenzproben müssen jeweils untereinander identisch sein. Sämtliche Paare aus Meßprobenund Referenzproben-Ankoppelzonen 18a",22a",18b",22b", 18c",22c" sind diametral einander gegenüberliegend und damit zentralsymmetrisch zum Mittelpunkt der Sensorplatte 16" oder spiegelsymmetrisch zu einer Symmetrielinie angeordnet. Um die Ankoppelzonen herum befinden sich die mit 48" gekennzeichneten Verbindungsbereiche, in denen die Sensorplatte 16" einen erhöhten thermischen Widerstand aufweist.

Für die Ankoppelzonen 18a"-18c" und 22a"-22c" werden paarweise identische halbleitende Materialien und von Paar zu Paar unterschiedliche halbleitende Materialien bzw. Halbleitermaterialien mit unterschiedlichen thermoelektrischen Eigenschaften eingesetzt. So weisen beispielsweise die Ankoppelzonen 18a" und 22a" ein erstes Halbleitermaterial, die Ankoppelzonen 18b" und 22b" ein zweites Halbleitermaterial und die Ankoppelzonen 18c" und 22c" ein drittes Halbleitermaterial auf, die sich entweder aufgrund ihres Halbleitermaterials oder aufgrund ihrer Dotierung (bezüglich des Dotierungsmaterials und/oder der Dotierungskonzentration) unterscheiden. Jeder Ankoppelzone ist ein Thermoelement 30a"-30c" und 32a"-32c" zugeordnet. Diese Thermoelemente sind paarweise mit der Auswerteeinheit 38" verbunden.

Unter der Voraussetzung, daß sich auf den Ankoppelzonen 18a"-18c" identische Meßproben und auf den Ankoppelzonen 22a"-22c" identische Referenzproben befinden, stellt sich zwischen jedem Paar von Ankoppelzonen 18a",22a"-18c",22c" die gleiche Temperaturdifferenz ein. Da jedoch für die Ankoppelzonen dieser drei Paare unterschiedliche thermoelektrische Halbleitermaterialien eingesetzt worden sind, ergeben sich zwischen den jeweils zugeordneten Thermoelementen 30a",32a"-30c", 32c" unterschiedlich große Spannungen. Dies liegt daran, daß das Maximum des Temperaturverlaufs des Seebeck-Koeffizienten der drei für die Ankoppelzonen ausgewählten thermoelektrischen halbleitenden Materialien bei unterschiedlichen Temperaturen liegt. Die Auswerteeinheit 38" wählt für die Auswertung die größte der drei ihr zugeführten (Meß-)Spannungen aus und führt ihre Berechnungen auf der Grundlage dieser größten Meßspannung aus, womit über einen breiten Temperaturbereich eine gleichmäßig maximale Empfindlichkeit der Sensorplatte 16" gegeben ist.

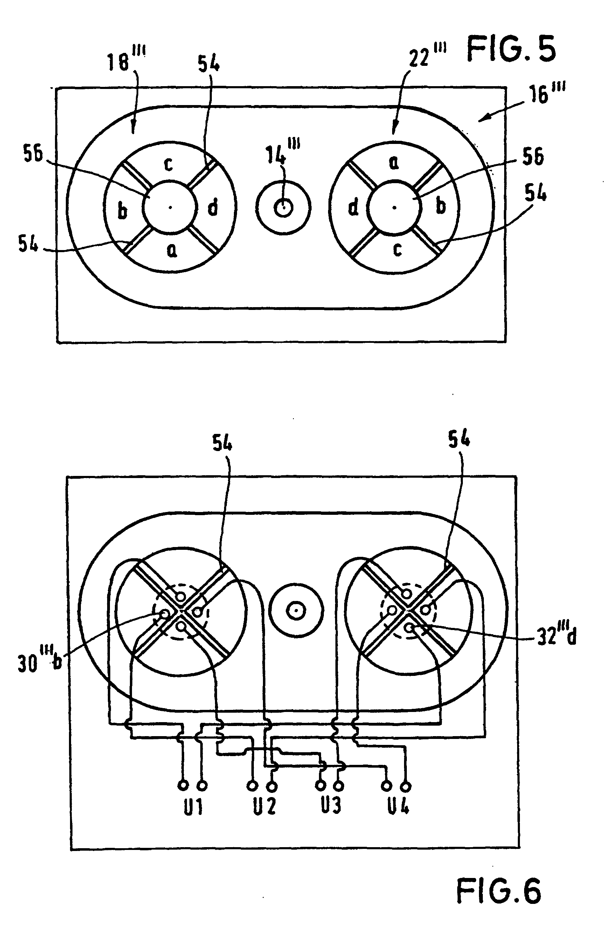

Ein weiteres Ausführungsbeispiel einer Sensorplatte 16''' mit mehreren unterschiedlichen thermoelektrischen halbleitenden Materialien ist in den Fign. 5 und 6 gezeigt. Auch hier gilt, daß diejenigen Teile der Sensorplatte 16''', die denjenigen Teilen der Sensorplatte 16 der Fig. 1 entsprechen, mit den gleichen Bezugszeichen, jedoch dreifach gestrichen gekennzeichnet sind.

Wie bei der Sensorplatte 16", weist auch die Sensorplatte 16''' mehrere Meßproben-Ankoppelzonen 18a'''-18d''' und mehrere Referenzproben-Ankoppelzonen 22a'''-22d''' auf, die paarweise zentralsymmetrisch zum Mittelpunkt der Sensorplatte 16''' angeordnet sind. Im Unterschied zur Sensorplatte 16" ist bei der Sensorplatte 16''' jedoch lediglich eine Meßproben- und eine Referenzproben-Position vorgesehen. Mit anderen Worten kontaktiert (thermisch) ein Tiegel für die Meßprobe sämtliche vier Meßproben-Ankoppelzonen 18a'''-18d''', während der Tiegel für die Referenzprobe sämtliche Referenzproben-Ankoppelzonen 22a'''-22d''' kontaktiert. Wie sich aus den Fign. 5 und 6 ergibt, sind die einzelnen Ankoppelzonen nach Art von Viertelkreisflächen ausgebildet, die jedoch mit Abstand zueinander angeordnet sind (siehe die Spalte 54 in den Fign. 5 und 6). Jede Ankoppelzone ist wiederum mit einem Thermoelement 30a'''-30d''' und 32a'''-32d''' versehen, deren Zuleitungen paarweise der Auswerteeinheit zugeführt werden. Da die Meßproben- und Referenzproben-Ankoppelzonen paarweise aus identischem Halbleitermaterial und von Paar zu Paar aus unterschiedlichen Halbleitermaterialien bestehen, stellen sich an den den Ankoppelzonen jeweils eines Paares zugeordneten Thermoelementen unterschiedliche Spannungsdifferenzen U1-U4 ein. Die Auswerteeinheit wählt zu Auswertungszwecken die größte der Spannungsdifferenzen aus. Auf diese Weise ist gewährleistet, daß über den gesamten interessierenden Temperaturbereich hinweg jeweils mit maximal großen Spannungsdifferenzen gearbeitet werden kann, was dazu führt, daß die Sensorplatte 16''' über den gesamten interessierenden Temperaturbereich hinweg eine große Empfindlichkeit aufweist.

Anstelle einer zentralsymmetrischen Anordnung der Ankoppelzonen ist auch eine zu einer Symmetrieachse symmetrische Anordnung möglich. Dies gilt für sämtliche der hier beschriebenen Ausführungsbeispiele.

Wie in den Fign. 5 und 6 gezeigt, sind die Meßproben-Ankoppelzonen und die Referenzproben-Ankoppelzonen durch elektrisch isolierende gut wärmeleitende Keramikscheiben 56 (allgemein Scheibe aus elektrisch isolierendem, thermisch gut an die Ankoppelzonen angekoppelten Material) verbunden, die jeweils in der Mitte der Ankoppelzonen angeordnet sind. Auf diese Keramikscheiben 56 werden die Tiegel für die Meßprobe und die Referenzprobe gestellt.

Die anhand der Fign. 5 und 6 beschriebene Ausgestaltung der Sensorplatte 16''' eignet sich insbesondere dann, wenn für die Ankoppelzonen das gleiche Halbleiter-Grundmaterial, jedoch mit unterschiedlichen Dotierungen eingesetzt wird. Wegen der Nähe der Anordnung der Ankoppelzonen ist es nämlich zweckmäßig, wenn diese das gleiche Temperaturausdehnungsverhalten zeigen. Dies ist am ehesten gewährleistet, wenn die Grundmaterialien gleich sind und sich nur geringfügig durch die Dotierungen unterscheiden. Auf diese Weise wird auch der Erfordernis, daß es infolge der Erwärmung der Sensorplatte 16''' nicht zu deren Zerstörung aufgrund thermischer Spannungen kommen darf, Genüge geleistet.

## Patentansprüche

1. Differenz-Thermoanalyse-Vorrichtung zur messtechnischen Untersuchung oder Ermittlung eines Parameters einer Messprobe, insbesondere des Phasenübergangs oder der spezifischen Wärme der Messprobe, mit
- einer Wärmequelle (12),
- einer thermisch mit der Wärmequelle (12) gekoppelten Sensorplatte (16,16',16",16'''), auf bzw. in der eine Messproben-Ankoppelzone (18,18',18",18"') zur thermischen Ankopplung einer zu vermessenden Messprobe (20) und eine Referenzproben-Ankoppelzone (22,22',22",22''') zur thermischen Ankopplung einer Referenzprobe (24) mit einem bezüglich des zu untersuchenden oder zu messenden Parameters bekannten Verhalten ausgebildet sind,
- einem Messproben-Temperatursensor (30,30',30", 30''') zur Ermittlung der lokalen Temperatur der Sensorplatte (16,16',16",16''') an der Messproben-Messstelle,
- einem Referenzproben-Temperatursensor (32,32',32",32''') zur Ermittlung der lokalen Temperatur der Sensorplatte (16, 16',16",16''') an der Referenzproben-Messstelle und
- einer Auswerteeinheit (38,38"), die mit den Temperatursensoren (30,32,30',32',30",32", 30"',32"') elektrisch verbunden ist und anhand einer Differenz der lokalen Temperaturen der Messproben- und Referenzproben-Ankoppelzonen (18,22,18',22',18",22",18''',22''') der Sensorplatte (16,16',16",16''') sowie des bekannten Verhaltens der Referenzprobe eine Ausgabe erzeugt, die für den interessierenden Parameter der Messprobe (20) repräsentativ ist,
**dadurch gekennzeichnet,**
- **dass** die Sensorplatte (16,16',16",16''') zumindest innerhalb ihrer Messproben- und Referenzproben-Ankoppelzonen (18,22,18',22',18", 22",18''',22''') ein keramisches oder ein ein- oder polykristallines thermoelektrisches Halbleitermaterial aufweist.

2. Vorrichtung nach Anspruch 1, **dadurch gekennzeichnet, daß** das thermoelektrische Halbleitermaterial mit P, Ga, As oder B oder weiteren Elementen in einer Ladungsträgerdichte zwischen 10¹⁵ und 10²¹ 1/cm³ dotiertes Si₁₋ₓGeₓ ist, wobei x zwischen 0 und 1, einschließlich, liegt.

3. Vorrichtung nach Anspruch 1, **dadurch gekennzeichnet, daß** das thermoelektrische Halbleitermaterial mit Co, Al, Mn, Ni oder Cr oder weiteren Elementen oder Kombinationen davon in einer Ladungsträgerdichte zwischen 10¹⁵ und 10²¹ 1/cm³ dotiertes FeSi₂ ist.

4. Vorrichtung nach Anspruch 1, **dadurch gekennzeichnet, daß** das thermoelektrisch aktive Material ein Halbleitermaterial auf der Basis von Bi₂(Te₁₋ₓSeₓ)₃ mit Fremddotierung, insbesondere Cl, J, oder einem Te- oder Se-Überschuß entsprechend einer Ladungsträgerdichte zwischen 10¹⁵ und 10²¹ 1/cm³ ist, wobei x zwischen 0 und 1, einschließlich, liegt.

5. Vorrichtung nach Anspruch 1, **dadurch gekennzeichnet, daß** das thermoelektrisch aktive Material ein Halbleitermaterial auf der Basis von (Bi₁₋ₓSbₓ)₂Te₃ mit Fremddotierung, insbesondere Pb, Ge, oder einem Bi- oder Sb-Überschuß entsprechend einer Ladungsträgerdichte zwischen 10¹⁵ und 10²¹ 1/cm³ ist, wobei x zwischen 0 und 1, einschließlich, liegt.

6. Vorrichtung nach Anspruch 1, **dadurch gekennzeichnet, daß** das thermoelektrische Halbleitermaterial native oder durch Dotierung hervorgerufene Störbandleitungseffekte oder Polaronen-Effekte aufweist und insbesondere aus AlB₁₂, FeSi₂ und B₁₋ₓCₓ mit x zwischen 0 und 1, einschließlich, besteht.

7. Vorrichtung nach einem der Ansprüche 1 bis 6, **dadurch gekennzeichnet, daß** die gesamte Sensorplatte (16,16') aus dem thermoelektrischen Halbleitermaterial besteht.

8. Vorrichtung nach einem der Ansprüche 1 bis 6, **dadurch gekennzeichnet, daß** die Sensorplatte (16, 16',16",16''') eine Trägerplatte aufweist, mit der die Meßproben- und Referenzproben-Ankoppelzonen (18,22,18',22',18",22",18''',22''') aus dem thermoelektrischen Halbleitermaterial thermisch verbunden sind.

9. Vorrichtung nach einem der Ansprüche 1 bis 8, **dadurch gekennzeichnet, daß** die Temperatursensoren (30,32,30',32',30",32", 30''',32''') als Thermoelemente ausgebildet sind, die jeweils eine mit den Meßproben- und Referenzproben-Ankoppelzonen (18,22,18',22',18",22",18''',22''') verbundene Zuleitung (34,36) aus einem von dem thermoelektrischen Halbleitermaterial der Ankoppelzonen (18,22, 18',22',18",22",18''',22''') unterschiedlichen Material aufweisen, wobei die Temperaturdifferenz zwischen der Meßproben-Ankoppelzone und der Referenzproben-Ankoppelzone (18,22,18',22',18",22", 18''',22''') als Spannungsdifferenz zwischen den beiden zu den Thermoelementen führenden Zuleitungen (34,36) vorliegt.

10. Vorrichtung nach einem der Ansprüche 1 bis 9, **dadurch gekennzeichnet, daß** die Sensorplatte (16, 16',16",16''') im Umgebungsbereich um die Ankoppelzonen (18,22,18',22',18",22",18''',22''') herum einen erhöhten Wärmewiderstand aufweist.

11. Vorrichtung nach Anspruch 10, **dadurch gekennzeichnet, daß** der erhöhte Wärmewiderstand konstruktiv durch Verringerung der Menge an Material im Umgebungsbereich (48) der Ankoppelzonen (18,22,18', 22',18",22",18''',22''') realisiert ist.

12. Vorrichtung nach Anspruch 11, **dadurch gekennzeichnet, daß** der Umgebungsbereich (48) Aussparungen und/oder Verdünnungen (52) aufweist.

13. Vorrichtung nach einem der Ansprüche 1 bis 12, **dadurch gekennzeichnet, daß** die Sensorplatte (16", 16''') mehrere Paare von Meßproben- und Referenzproben-Ankoppelzonen (18",22",18''',22''') aufweist, wobei jedes Paar aus Halbleitermaterial mit verschiedenen thermoelektrischen Eigenschaften besteht, daß jede Meßproben- und Referenzproben-Ankoppelzone (18",22",18''',22''') einem Temperatursensor (30",32",30''',32''') zugeordnet ist, die sämtlich elektrisch mit der Auswerteeinheit (38") verbunden sind, und daß die Auswerteeinheit (38") die Differenztemperatur anhand der größten Ausgangssignale der einem Paar von Meßproben- und Referenzproben-Ankoppelzonen (18",22",18''',22''') zugeordneten Temperatursensoren (30",32",30''', 32''') ermittelt.

14. Vorrichtung nach Anspruch 13, **dadurch gekennzeichnet, daß** jede Ankoppelzone (18",22") zur thermischen Kopplung mit einer Meß- oder Referenzprobe (20,24) vorgesehen ist.

15. Vorrichtung nach Anspruch 13, **dadurch gekennzeichnet, daß** mehrere, insbesondere sämtliche Meßproben-Ankoppelzonen (18''') und mehrere, insbesondere sämtliche Referenzproben-Ankoppelzonen (22''') gemeinsam zur thermischen Kopplung mit einer Meßprobe (20) bzw. einer Referenzprobe (24) vorgesehen sind.

16. Vorrichtung nach einem der Ansprüche 13 bis 15, **dadurch gekennzeichnet, daß** die Ankoppelzonenpaare (18",22",18''',22''') aus unterschiedlichen Halbleitermaterialien bestehen.

17. Vorrichtung nach einem der Ansprüche 13 bis 15, **dadurch gekennzeichnet, daß** die Ankoppelzonenpaare (18",22",18''',22''') aus dem gleichen Halbleitermaterial bestehen, jedoch unterschiedliche Dotierungen und/oder Dotierungsladungsträgerdichten aufweisen.

18. Vorrichtung nach einem der Ansprüche 1 bis 17, **dadurch gekennzeichnet, daß** die Sensorplatte (16, 16',16",16''') in den Ankoppelzonen (18,22,18', 22', 18",22",18''',22''') mit einer Metallbeschichtung (42,44) versehen ist.

19. Vorrichtung nach Anspruch 18, **dadurch gekennzeichnet, daß** zwischen der Metallbeschichtung (42,44) und dem Halbleitermaterial der Ankoppelzonen (18, 22,18', 22', 18",22",18''',22''') eine elektrisch isolierende Schicht angeordnet ist.

## Claims

1. Differential thermoanalysis device for measuring or determining a parameter of a test sample, in particular the phase transition or the specific heat of the test sample, comprising:
a heat source (12),
a sensor plate (16,16',16",16"') thermally coupled with the heat source (12), on or in which are formed a test sample coupling zone (18,18',18"/18'") for thermal coupling of a test sample (20) to be measured and a reference sample coupling zone (22,22',22",22"') for thermal coupling of a reference sample (24) displaying a behaviour known with regard to the parameter to be examined or measured,
a test sample temperature sensor (30,30',30",30'") for determining the local temperature of the sensor plate (16,16',16",16"') at the test sample measuring location,
a reference sample temperature sensor (32,32',32",32"') for determining the local temperature of the sensor plate (16,16',16",16"') at the reference sample measuring point, and
an evaluation unit (38,38") which is electrically connected with the temperature sensors (30,32,30',32',30",32",30"1,32"') and generates, on the basis of a difference of the local temperatures of the test sample and reference sample coupling zones (18,22,18',22',18",22",18"',22"') of the sensor plate (16,16',16", 16'") as well as the known behaviour of the reference sample, an output signal which is representative of the parameter of interest of the test sample (20),
wherein the sensor plate (16,16',16",16"') comprises a ceramic or a monocrystalline or polycrystalline thermoelectric semiconductor material at least within its test sample and reference sample coupling zones (18,22,18',22',18",22",18'",22'").

2. Device according to claim 1, **characterized in that** the thermoelectric semiconductor material containing P, Ga, As, or B or further elements of a charge carrier density between 10¹⁵ and 10²¹ 1/cm³ is doped Si₁₋ₓ Geₓ, wherein x ranges between 0 and 1 inclusive.

3. Device according to claim 1, **characterized in that** the thermoelectric semiconductor material containing Co, AI, Mn, Ni or Cr or further elements or combinations thereof of a charge carrier density between 10¹⁵ and 10²¹ 1/cm³ is doped FeSi₂.

4. Device according to claim 1, **characterized in that** the thermoelectrically active material is a semiconductor material on the basis of Bi₂(Te₁₋ₓSeₓ)₃ with foreign doping, in particular Cl, J or a Te or Se excess corresponding to a charge carrier density between 10¹⁵ and 10²¹ 1/cm³, wherein x ranges between 0 and 1, inclusive.

5. Device according to claim 1, **characterized in that** the thermoelectrically active material is a semiconductor material on the basis of (Bi₁₋ₓSbₓ)₂Te₃ with foreign doping, in particular Pb, Ge or a Bi or Sb excess corresponding to a charge carrier density between 10¹⁵ and 10²¹ 1/cm³, wherein x ranges between 0 and 1, inclusive.

6. Device according to claim 1, **characterized in that** the thermoelectric semiconductor material displays native impurity band conduction effects or polaron effects or native impurity band conduction effects or polaron effects caused by doping, and is in particular made from AIB₁₂, FeSi₂ and B₁₋ₓCₓ with x ranging between 0 and 1, inclusive.

7. Device according to one of Claims 1 to 6, **characterized in that** the overall sensor plate (16,16') is made from the thermoelectric semiconductor material.

8. Device according to one of claims 1 to 6, **characterized in that** the sensor plate (16,16',16",16'") comprises a carrier plate with which the test sample and reference sample coupling zones (18, 22, 18', 22', 18", 22", 18"', 22"') from the thermoelectric material are thermally connected.

9. Device according to one of claims 1 to 8, **characterized in that** the temperature sensors (30,32/301,32',30",32",30"',32"') are configured as thermocouples each comprising a feed line (34,36) which is made from a material differing from the thermoelectric semiconductor material of the coupling zones (18,22,18',22',18",22",18"',22"') and which is connected with the test sample and reference sample coupling zones (18,22,18',22',18",22",18"l,22"'), wherein the temperature difference between the test sample coupling zone and the reference sample coupling zone (18,22,18',22',18",22",18'",22'") is available as voltage difference between the two feed lines (34,36) leading to the thermocouples.

10. Device according to one of claims 1 to 9, **characterized in that** the sensor plate (16,16',16",16"') displays an increased thermal resistance in the neighborhood of the coupling zones (18, 22, 18', 22', 18", 22", 18"', 22'").

11. Device according to claim 10, **characterized in that** the increased thermal resistance is realized in the design by a reduced amount of material in the neighbourhood (48) of the coupling zones (18, 22, 18', 22', 18", 22", 18"',22"').

12. Device according to claim 11, **characterized in that** the neighbourhood (48) comprises recesses and/or diminutions (52).

13. Device according to one of claims 1 to 12, **characterized in that** the sensor plate (16"/16'") comprises a plurality of pairs of test sample and reference sample coupling zones (18",22",18"',22'") wherein each pair is made from semiconductor material displaying different thermoelectric properties, that each test sample and reference sample coupling zone (18", 22", 18'", 22"') is associated with a temperature sensor (30", 32", 30"', 32'") which are all electrically connected with the evaluation unit (38"), and that the evaluation unit (38") determines the differential temperature on the basis of the highest output signals of the temperature sensors (30", 32", 30'", 32'") associated with test sample and reference sample coupling zones (18",22",18"',22"').

14. Device according to claim 13, **characterized in that** each coupling zone (18",22") is provided for thermal coupling to a test or reference sample (20,24).

15. Device according to claim 13, **characterized in that** a plurality of and in particular all test sample coupling zones (18'") and a plurality of and in particular all reference sample coupling zones (22"') are jointly provided for thermal coupling with a test sample (20) and a reference sample (24), respectively.

16. Device according to one of claims 13 to 15, **characterized in that** the coupling zone pairs (18",22",18'",22'") are made from different semiconductor materials.

17. Device according to one of claims 13 to 15, **characterized in that** the coupling zone pairs (18",22",18'",22'") are made from the same semiconductor material but have different dopings and/or doping carrier charge densities.

18. Device according to one of claims 1 to 17, **characterized in that** the sensor plate (16,16',16",16"') in the coupling zones (18,22,18',22', 18",22",18"',22'") is provided with a metal coating (42,44).

19. Device according to claim 18, **characterized in that** between the metal coating (42,44) and the semiconductor material of the coupling zones (18,22,18',22',18",22",181",22"') an electrically insulating layer is arranged.

## Revendications

1. Dispositif d'analyse thermique différentielle pour l'examen ou la détermination, au moyen d'une technique de mesure, d'un paramètre d'un échantillon de mesure, notamment de la transition de phase ou de la chaleur spécifique de l'échantillon de mesure, comportant
- une source de chaleur (12),
- une plaque à capteurs (16, 16', 16", 16"') couplée à la source de chaleur (12), sur ou dans laquelle sont formées une zone (18, 18', 18", 18"') de couplage de l'échantillon de mesure pour réaliser le couplage thermique d'un échantillon de mesure (20) à mesurer et une zone (22, 22', 22", 22"') de couplage d'un échantillon de référence pour réaliser le couplage thermique d'un échantillon de référence (24) à un comportement connu en ce qui concerne le paramètre à examiner ou à mesurer,
- un capteur (30, 30', 30", 30"') de température de l'échantillon de mesure servant à déterminer la température locale de la plaque à capteurs (16, 16', 16", 16"') au niveau de l'emplacement de mesure de l'échantillon de mesure, et
- un capteur (32, 32', 32", 32"') de température de l'échantillon de référence pour déterminer la température locale de la plaque à capteurs (16, 16', 16", 16"') au niveau du point de mesure de l'échantillon de référence, et
- une unité d'évaluation (38, 38"), qui est reliée électriquement aux capteurs de température (30, 32, 30', 32', 30", 32", 30"', 32"') et produit, sur la base d'une différence des températures locales des zones de couplage (18, 22, 18', 22', 18", 22", 18"', 22"') de l'échantillon de mesure et de l'échantillon de référence de la plaque à capteurs (16, 16', 16", 16"') ainsi que sur la base du comportement connu de l'échantillon de référence, un signal de sortie qui est représentatif du paramètre, auquel on s'intéresse, de l'échantillon de mesure (20),
**caractérisé en ce**
- **que** la plaque à capteurs (16, 16', 16", 16"') comporte au moins à l'intérieur de ses zones (18, 22, 18', 22', 18", 22", 18"', 22"') de couplage de l'échantillon de mesure et de l'échantillon de référence, un matériau semiconducteur céramique ou un matériau semiconducteur thermoélectrique, monocristallin ou polycristallin.

2. Dispositif selon la revendication 1, **caractérisé en ce que** le matériau semiconducteur thermoélectrique est du Si₁₋ₓGeₓ dopé par du P, du Ga, du As ou du B ou d'autres éléments avec une densité de porteurs de charges comprise entre 10¹⁵ et 10²¹ 1/cm³, x étant compris entre 0 et 1 inclusivement.

3. Dispositif selon la revendication 1, **caractérisé en ce que** le matériau semiconducteur thermoélectrique est du FeSi₂ dopé par du Co, du Al, du Mn, du Ni ou du Cr ou par d'autres éléments ou combinaisons de tels éléments avec une densité de porteurs de charges comprise entre 10¹⁵ et 10²¹ 1/cm³.

4. Dispositif selon la revendication 1, **caractérisé en ce que** le matériau actif du point de vue thermoélectrique est un matériau semiconducteur à base de Bi₂(Te₁₋ₓSeₓ)₃ avec un dopage étranger, notamment avec du Cl, du J ou un excès de Te ou de Se conformément à une densité de porteurs de charges comprise entre 10¹⁵ et 10²¹ 1/cm³, x étant compris entre 0 et 1 inclusivement.

5. Dispositif selon la revendication 1, **caractérisé en ce que** le matériau actif du point de vue thermoélectrique est un matériau semiconducteur à base de (Bi₁₋ₓSbₓ)₂Te₃ avec un dopage étranger, notamment Pb, Ge ou un excès de Bi ou de Sb conformément à une densité de porteurs de charges comprise entre 10¹⁵ et 10²¹ 1/cm³, x étant compris entre 0 et 1 inclusivement.

6. Dispositif selon la revendication 1, **caractérisé en ce que** le matériau semiconducteur thermoélectrique possède des effets de conduction de bande parasites ou des effets de polarons, à l'état natif ou provoqués par dopage, et notamment est constitué par du AlB₁₂, du FeSi₂ et du B₁₋ₓCₓ avec x compris entre 0 et 1 inclusivement.

7. Dispositif selon l'une des revendications 1 à 6, **caractérisé en ce que** l'ensemble de la plaque à capteurs (16, 16') est réalisé en un matériau semiconducteur thermoélectrique.

8. Dispositif selon l'une des revendications 1 à 6, **caractérisé en ce que** la plaque à capteurs (16, 16', 16", 16"') comporte une plaque de support, avec laquelle les zones (18, 22, 18', 22', 18", 22", 18"', 22"') de l'échantillon de mesure et de l'échantillon de référence formées par le matériau semiconducteur thermoélectrique sont reliées thermiquement.

9. Dispositif selon l'une des revendications 1 à 8, **caractérisé en ce que** les capteurs de température (30, 32, 30', 32', 30", 32", 30"', 32"') sont agencés sous la forme de thermocouples, qui possèdent respectivement un conducteur d'alimentation (34, 36) relié aux zones (18, 22, 18', 22', 18", 22", 18"', 22"') de couplage de l'échantillon de mesure et de l'échantillon de référence et constitué par un matériau qui diffère du matériau semiconducteur thermoélectrique des zones de couplage (18, 22, 18', 22', 18", 22", 18"', 22"'), la différence de température entre la zone de couplage de l'échantillon de mesure et la zone de couplage de l'échantillon de référence (18, 22, 18', 22', 18", 22", 18"', 22"') étant présentes sous la forme d'une différence de tension entre les deux conducteurs d'alimentation (34, 36) conduisant aux thermocouples.

10. Dispositif selon l'une des revendications 1 à 9, **caractérisé en ce que** la plaque à capteurs (16, 16', 16", 16"') comporte, dans la zone qui entoure les zones de couplage (18, 22, 18', 22', 18", 22", 18"', 22"'), une résistance thermique accrue.

11. Dispositif selon la revendication 10, **caractérisé en ce que** la résistance thermique accrue est réalisée du point de vue construction au moyen d'une réduction de la quantité de matière dans la zone d'entourage (48) et dans la zone de couplage (18, 22, 18', 22', 18", 22", 18"', 22"').

12. Dispositif selon la revendication 11, **caractérisé en ce que** la zone d'entourage (48) comporte des évidements et/ou des amincissements (52).

13. Dispositif selon l'une des revendications 1 à 12, **caractérisé en ce que** la plaque à capteurs (16", 16"') comporte plusieurs paires de zones (18", 22", 18"', 22"') de couplage de l'échantillon de mesure et de l'échantillon de référence, chaque paire étant constituée d'un matériau semiconducteur possédant différentes caractéristiques thermoélectriques, que chaque zone (18", 22", 18"', 22"') de couplage de l'échantillon de mesure et de l'échantillon de référence est associée à un capteur de température (30", 32", 30" ', 32"'), qui sont tous reliés électriquement à l'unité d'évaluation (38"), et que l'unité d'évaluation (38") détermine la différence de température sur la base des signaux de sortie maximum des capteurs de température (30", 32", 30"', 32" ') associés à une paire de zones (18", 22", 18"', 22" ') de couplage de l'échantillon de mesure et de l'échantillon de référence.

14. Dispositif selon la revendication 13, **caractérisé en ce que** chaque zone de couplage (18", 22") est prévue pour le couplage thermique avec un échantillon de mesure ou de référence (20, 24).

15. Dispositif selon la revendication 13, **caractérisé en ce que** plusieurs et notamment toutes les zones (18"') de couplage de l'échantillon de mesure et plusieurs et notamment toutes les zones (22"') de l'échantillon de référence sont prévues en commun pour réaliser le couplage thermique avec un échantillon de mesure (20) et un échantillon de référence (24).

16. Dispositif selon l'une des revendications 13 à 15, **caractérisé en ce que** les paires (18", 22", 18"', 22"') de zones de couplage sont constituées par des matériaux semiconducteurs différents.

17. Dispositif selon l'une des revendications 13 à 15, **caractérisé en ce que** les paires de zones de couplage (18", 22", 18"', 22"') sont constituées par le même matériau semiconducteur, mais possèdent des dopages différents et/ou des densités différentes de porteurs de charges de dopage.

18. Dispositif selon l'une des revendications 1 à 17, **caractérisé en ce que** la plaque à capteurs (16, 16', 16", 16"') comporte, dans les zones de couplage (18, 22, 18', 22', 18", 22", 18"', 22"'), un revêtement métallique (42, 44).

19. Dispositif selon la revendication 18, **caractérisé en ce qu'**une couche électriquement isolante est disposée entre le revêtement métallique (42, 44) et le matériau semiconducteur des zones de couplage (18, 22, 18', 22', 18", 22", 18"', 22"').
